# EUROPEAN PATENT APPLICATION

(11) **EP 1 512 322 A1**
(43) Date of publication of application: **09.03.2005**
(21) Application number: 04077347.5
(22) Date of filing: 19.08.2004
(51) Int. Cl.: A01K 1/015, C08L 3/02, C08L 97/02, B01J 20/22

(54) **Method of producing a litter for animal accomodations**

(30) Priority: 28.08.2003 NL 1024177
(71) Applicant: Plomp en Zonen B.V., 4181 CB Waardenburg (NL)
(72) Inventor: Plomp, Rudolf Theodorus Maria, 3645 TG Vinkeveen (NL)
(74) Representative: Dohmen, Johannes Maria Gerardus

(57) **Abstract**

The present invention relates to a method of producing a litter for animal accommodations, as well as to a litter thus obtained. The present invention furthermore relates to a cat box provided with a litter. It is an object of the invention to provide a litter having a low specific weight and a good moisture-absorption power and which is environmentally friendly.

## Description

The present invention relates to a method of producing a litter for animal accommodations, as well as to a litter thus obtained. The present invention furthermore relates to a cat box provided with a litter.

A method of producing a litter for animal accommodations is known from Dutch patent No. 1 015 138, wherein grasses, such as mowed grass material, mowed waterweed material and mowed roadside material are used as the starting material. After being reduced, the starting material is dehydrated at a temperature of 160 °C for a short period, after which a binder consisting of a starch, a vegetable fat and/or protein is added to the dried material. Following that, the dried material and the binder are jointly compressed into cylinder-shaped pellets having a diameter of 5-7 mm and a length of 5-40 mm.

Japanese patent publication No. 2000 032861 relates to a litter that is used in animal accommodations, which litter is a granular product. Said granular product is obtained by preparing a mixture of wood powder, a binder and water and subsequently extruding said mixture to obtain a cylinder-shaped granular material, which is subsequently dehydrated and sieved.

French patent publication No. 2 618 641 relates to a method of producing a litter for animal accommodations, wherein waste paper is used as the starting material.

US patent No. 4,206,718 relates to a litter for animal accommodations, wherein chlorophyll-containing alfalfa is mixed with a gelatinizable component. A cohesive starting material is formed of the mixture thus obtained through the application of steam and pressure, after which the bound-together particles will expand in the atmosphere and obtain an expanded-porous structure as a result of the internal steam pressure.

From German Offenlegungsschrift No. 42 01 410 there is known a litter for animal accommodations wherein a material based on chopped straw and/or hay is premoisturized, after which the mixture is compressed into tablets or pellets in a compression step.

From US patent No. 6,508,965 there is known a method of producing a cat litter, wherein shredded paper is used as the starting material, which, after mixing with water and subsequent dehydration, is cut into the desired pellets.

Traditionally, a litter for animal accommodations is mainly obtained from clay-like materials, because clay absorbs moisture, is inexpensive and can readily be discharged via the wastebin. In addition, clay-like materials form lumps when they are wet, so that it is easier for the owner of a pet to selectively remove the moisturised litter materials from the animal accommodation. Such clay-like lumps exhibit relatively little cohesion, however, so that there is a risk of the lumps crumbling once they have dried and falling apart upon being removed from the animal accommodation. Thus the removal of moisturised litter from the animal accommodation will be difficult, and as a result the amount of moisturised clay-like material in the animal accommodation will probably increase. This in turn will lead to objectionable odours emanating from the animal accommodation as a result of the presence of the remaining clay-like material. Another problem connected with a clay-like litter material is the formation of dust. Dust is formed during the production process as a result of the dehydration of the clay particles and the subsequent grinding of the particles. During grinding, small particles are formed, which constitute an integral part of the litter. Such small particles are in particular released when the package is opened by the user upon introduction of the litter into the animal accommodation. Another drawback is the fact that the dust-like material will adhere to the fur of the animal, causing the dust to spread. In addition to that it may be noted that litters based on clay-like materials are not considered to be biodegradable, which means that the material cannot be discharged via the organic waste bin.

The present inventor markets cat litter as well as wood fibres for hamsters and rabbits, among other animals. The specific weight of such materials, in particular the cat litter, is about 600 kg/m³, which means that small packages of e.g. 10 litres already represent a weight of 6 kg. Such a weight is found to be awkward by consumers. The cat litter is obtained by compressing wood chips having a dimension of 1-5 mm in an assembly of pressure plates and rollers.

A first aspect of the present invention is to provide a method of manufacturing a litter for animal accommodations wherein a litter is obtained that has a significantly lower density than the litters that are presently commercially available.

Another aspect of the present invention is to provide a litter for animal accommodations wherein a starting material that was previously considered to be a waste material is used.

Yet another aspect of the present invention is to provide a litter for animal accommodations which presents substantially no problems with regard to the formation of dust and which has a good moisture-absorption power.

The method as referred to in the introduction is characterized in that a material derived from wood and one or more additives are extruded, after which the extruded product is reduced into a litter.

Wood pulp obtained from woodworking is used as the wood-derived material.

The wood pulp that is preferably used in the present invention has a particle size mainly ranging from 0.5 to 1 mm. The wood pulp according to the present invention may furthermore contain particles having a particle size outside the aforesaid range, but such small or large particles are considered to be "chance" particles resulting from the screening operation. Such a particle size is obtained by subjecting wood shavings, wood chips and the like obtained from woodworking to a number of screening operations to provide a wood pulp having a particle size mainly ranging from 0.5 to 1 mm. The wood pulp having such a particle size is in particular suitable for being processed by means of an extrusion process.

To obtain a litter having the desired density, it is preferable to use one or more additives selected from the group of liquefiers, binders, preservatives and odorants during the extrusion step.

It is in particular preferable to use maize as an additive for the extrusion process, additional additives including: a starch-containing material, such as flour, starch obtained from potatoes, cellulose, lactose, carboxymethyl cellulose and lignosulphonate (wood sugars). The use of a starch-containing material in particular gives the obtained litter a porous appearance, which porosity has an advantageous effect not only on the absorption power, but also on the specific weight.

The present invention further relates to a litter for animal accommodations obtained by extruding a product derived from wood and one or more additives and subsequently reducing said product, said litter having an absorption power varying from 150-250%, a specific weight varying from 200-500 kg/m³ and a particle size varying from 1-5 mm.

In a special embodiment, a well-absorbing litter having a specific weight in the aforesaid range has a particle size ranging from 1 to 15 mm, in particular 3 to 10 mm.

Preferably, wood pulp obtained from woodworking is used as the wood-derived material in the present litter material, which wood pulp in particular has a particle size mainly ranging from 0.5 to 1 mm.

The particle size of the wood pulp is in particular important with a view to carrying out the extrusion step. A particle size of less than 0.5 mm leads to clogging of the extruder. Moreover, it has become apparent that the present wood pulp has a high absorption power, which absorption furthermore takes place quickly, so that the malodorous components are quickly and efficiently absorbed by the litter. Additional research has shown that the present litter composed of the present wood pulp exhibits an excellent composting behaviour, which is important in particular with a view to achieving an environmentally friendly discharge of these materials, which are used on a large scale in households.

Preferably, the litter comprises one or more additives besides the wood pulp, which additives are selected from the group of liquefiers, binders, preservatives and odorants, with in particular maize being used as an additive. In addition to that it is preferable with a view to obtaining the desired porous nature of the litter to use a starch-containing material, such as flour, starch obtained from potatoes, cellulose, lactose, carboxymethyl cellulose and lignosulphonate (wood sugars).

To prevent fungoid growth, an anti-fungal agent may be added, in which connection an agent with a base of organic acids, in particular propionic acid and sorbic acid have appeared to be effective.

With a view to achieving a good moisture-absorption power, the wood-derived material is preferably present in an amount of at least 50 per cent by weight, preferably 70 per cent by weight, in particular 90 per cent by weight, based on the total weight of the obtained litter. In a special embodiment, a lump or clod-forming litter is obtained if an amount of at least 30% cellulose is used as an additive.

The litter according to the present invention is suitable for use in animal accommodations, in which connection in particular cat boxes may be considered. Such a cat litter is environmentally friendly, biodegradable and has a high absorption power. The porous nature of the litter is in particular advantageous when used in cat boxes, since relatively large amounts of excrements must be absorbed in such cat boxes. Moreover, the litters are shaped in such a manner that no particles will remain behind in the cats' paws. Other animal accommodations for which the litter is suitable are, for example, accommodations for cattle, poultry, reptiles, pigs and horses.

## Claims

1. A method of producing a litter for animal accommodations, **characterized in that** a material derived from wood and one or more additives are extruded, after which the extruded product is reduced into a litter.

2. A method according to claim 1, **characterized in that** wood pulp obtained from woodworking is used as the wood-derived material.

3. A method according to claim 2, **characterized in that** the wood pulp has a particle size mainly ranging from 0.5 to 1 mm.

4. A method according to any one or more of the preceding claims 1-3, **characterized in that** the additives are selected from the group of liquefiers, binders, preservatives and odorants.

5. A method according to any one or more of the preceding claims 1-4, **characterized in that** maize is used as an additive.

6. A method according to any one or more of the preceding claims 1-5, **characterized in that** a starch-containing material, such as flour, is used as an additive.

7. A method according to any one or more of the preceding claims 1-6, **characterized in that** an anti-fungal agent is used as a preservative.

8. A method according to any one or more of the preceding claims, **characterized in that** the animal accommodation is a cat box.

9. A litter for animal accommodations obtained by extruding a product derived from wood and one or more additives and subsequently reducing said product, the litter thus obtained having an absorption capacity of 150-250%, a specific weight varying from 200-500 kg/m³ and a particle size varying from 1-15 mm.

10. A litter according to claim 9, **characterized in that** wood pulp obtained from woodworking is used as the wood-derived material.

11. A litter according to claim 10, **characterized in that** the wood pulp has a particle size mainly ranging from 0.5 to 1 mm.

12. A litter according to any one or more of the claims 9-11, **characterized in that** maize is used as an additive.

13. A litter according to any one or more of the claims 9-12, **characterized in that** a starch-containing material, such as flour, is used as an additive.

14. A litter according to any one or more of the claims 9-13, **characterized in that** the wood-derived material is present in an amount of at least 50 per cent by weight, based on the total weight of the obtained litter.

15. A litter according to claim 14, **characterized in that** the wood-derived material is present in an amount of at least 70 per cent by weight, based on the total weight of the obtained litter.

16. A litter according to claim 15, **characterized in that** the wood-derived material is present in an amount of at least 90 per cent by weight, based on the total weight of the obtained litter.

17. A litter according to any one or more of the preceding claims, **characterized in that** the litter has a particle size of 1-5 mm.

18. A cat box provided with a litter according to any one or more of the claims 9-17.
